Europäisches Patentamt

European Patent Office

Office européen des brevets

(19)

(11) Veröffentlichungsnummer: **0 447 584 A1**

# EUROPÄISCHE PATENTANMELDUNG

(12)

(21) Anmeldenummer: 90105314.0

(22) Anmeldetag: 21.03.90

(51) Int. Cl.⁵: **D06N 3/18**, D06N 3/12, D06N 7/00, B32B 27/12, A62D 5/00

(43) Veröffentlichungstag der Anmeldung:
25.09.91 Patentblatt 91/39

(84) Benannte Vertragsstaaten:
**AT BE CH DE DK ES FR GB GR IT LI LU NL SE**

(71) Anmelder: **Clouth Gummiwerke AG**
**Niehler Strasse 92 - 116**
**W-5000 Köln 60(DE)**

(72) Erfinder: **Brand, Dieter**
**Pinienweg 14**
**W-5000 Köln 71(DE)**

(54) Gewebe mit hoher Beständigkeit gegen Chemikalien und Gase.

(57) Bei einem beschichteten Textilstoff, der aus mindestens einer textilen Trägerbahn und mindestens einer äußeren flexiblen Gummi- oder Kunststoffschicht besteht, ist mindestens eine zusätzliche Polyimidschicht angeordnet, die mit hoher Haftung an die jeweils benachbarte Schicht gebunden ist.

EP 0 447 584 A1

Die Erfindung betrifft einen beschichteten Textilstoff, bestehend aus mindestens einer textilen Trägerbahn und mindestens einer äußeren flexiblen Gummi- oder Kunststoffschicht.

Derartige beschichtete Textilstoffe werden in leichterer Ausführung (ca. 200 g/m²) zur Herstellung von Schutzbekleidung und in schwereren Ausführungen (bis ca. 1000 g/m²) zur Herstellung von Verpackungsbehältern, auch als Abdeckplanen verwendet. Die Trägerbahnen sind meist Gewebe, deren Bindung unterschiedlich sein kann, können aber auch Wirkstoffe oder Faservliese sein. Als Werkstoff werden Polyester, Polyamid, Aramid, Glas oder Kohlenstoff eingesetzt. Die Trägerbahnen werden einseitig oder beidseitig vorpräpariert, um eine ausreichende Gummi/Gewebe- bzw. Kunststoff/Gewebe-Haftung zu erzielen. Für diese sogenannte Gummierung werden Elastomere bzw. thermoplastische Elastomere benutzt. Zum Schutz gegen Chemikalien und Gase sind Beschichtungen, bei mehrlagigen Trägerbahnen auch Zwischenbeschichtungen, mit elastischen Kunststoffen bekannt. Bei Kampfgasbeanspruchung, für sogenannten ABC-Schutz, wird zur Beschichtung vorwiegend das Elastomer IIR (Butylkautschuk) verwendet und bei sonstiger hoher Chemikalienbeanspruchung für Schutzanzüge, Planen usw. ein Fluor-Polymer. Als beständig gegen chemische Kampfstoffe gelten derartige beschichtete Textilien, wenn eine Retentionszeit von 5 bis 8 Stunden erreicht wird.

Bei vielen Einsatzmöglichkeiten wäre eine erheblich höhere Chemikalienbeständigkeit erforderlich. Aufgabe der Erfindung ist es daher, einen beschichteten Textilstoff zu schaffen, der - ohne Verschlechterung der bisher erreichten Eigenschaften, wie Elastizität, mechanische Festigkeit, Anpaßbarkeit des Schichtstoffaufbaus an den Verwendungszweck - eine wesentlich verbesserte Chemikalienbeständigkeit, insbesondere Gasdichtigkeit, auch bei hohen Temperaturen aufweist und ein verfahren zur wirtschaftlichen Herstellung dieses Stoffes anzugeben.

Diese Aufgabe wird bei einem beschichteten Textilstoff der im Oberbegriff des Anspruchs 1 angegebenen Gattung dadurch gelöst, daß mindestens eine zusätzliche Polyimidschicht angeordnet ist, die mit hoher Haftung an die jeweils benachbarte Schicht gebunden ist.

Die Dicke der Polyimidschicht beträgt 5 bis 200 μm, vorzugsweise 15 bis 20 μm. Einzelheiten der erfindungsgemäßen Anordnung der Schichten gehen aus den Unteransprüchen 4 bis 10 hervor.

Ein besonders wirtschaftliches Verfahren zur Herstellung derartiger beschichteter Textilstoffe besteht darin, daß auf beiden Seiten einer Trägerbahn eine Fluorkautschukmischung aufgebracht und getrocknet wird und dann auf mindestens einer Seite eine Polyimidschicht und gegebenenfalls weitere Schichten aufgebracht werden und der derart beschichtete Textilstoff einer Vulkanisation unterworfen wird. Besonders vorteilhaft ist es, wenn in weiterer Ausbildung des erfindungsgemäßen Verfahrens die Polyimidschicht in Form einer Polyimidfolie aufgebracht wird.

Die Anordnung einer zusätzlichen Schicht aus Polyimid, einem Werkstoff von hervorragender mechanischer Widerstandsfähigkeit in einem Temperaturbereich von ca. -200 bis + 350° C, Dauertemperaturbeständigkeit bis 300° C, Beständigkeit gegenüber Lösungsmitteln und sonstigen aggressiven Chemikalien ebenfalls bis zu hohen Temperaturen, löst die Aufgabe der Erfindung in einem unerwarteten Ausmaß. Trotz der relativ geringen Stärke der zusätzlichen Schicht wird eine Gasdichtheit des erfindungsgemäß beschichteten Textilstoffes erreicht, deren Grenzen durch die derzeit geltenden Profkriterien nicht meßbar sind. Mit Fluorkautschuk gummierte Gewebe gelten beispielsweise als beständig, wenn bei Prüfung mit 1.2.Dichloräthan nach 30 Minuten die Diffusionsrate kleiner als 20 ml/² ist. Bei dem erfindungsgemäßen beschichteten Textilstoff wurde nach mehr als 10 Stunden Prüfzeit noch keine Diffusion gemessen, ein Versuch mit dem Kampfstoff S-Lost wurde nach 30 Stunden ohne meßbare Diffusion abgebrochen.

Das erfindungsgemäße Herstellungsverfahren bewirkt eine sichere Haftung der zusätzlichen Polyimidschicht durch Vernetzung, indem die vorzugsweise in Form einer Folie auf- oder eingelegte Schicht einfach der normalen Vulkanisation der mit Fluorkautschukmischung gummierten Trägerbahn mit unterworfen wird.

In der praktischen Ausführung des Verfahrens hat es sich bewährt, auf ein Trägergewebe eine Fluorkautschukmischung aufzubringen, die unter der Marke VITON ® Im Handel ist. Nach dem Trocknen dieser Mischung wird eine Polyimidfolie aufgelegt, die unter der Marke KAPTON ® (4,5 oxydianilinpyromellithimid) im Handel erhältlich ist. Darauf wird nochmals eine VITON ® -Schicht verteilt, um das nicht gegen UV-Strahlen beständige Polyimid abzudecken. Sobald die gewünschte Anzahl von Schichten aufgebracht ist, wird das Ganze bei den für die Fluorkautschukmischung VITON ® vom Hersteller vorgeschriebenen Druck- und Temperaturwerten vulkanisiert. Auf diese Weise kann, trotz Verwendung des normalerweise als besonders schwierig verarbeitbar geltenden Werkstoffes Polyimid, der erfindungsgemäße beschichtete Textilstoff wirtschaftlich hergestellt werden.

Obwohl Polyimid ein kostenaufwendiges Material ist, kann wegen dessen hoher Reißfestigkeit billigeres Trägermaterial verwendet werden und es wird insgesamt eine erheblich längere Haltbarkeit des erfindungsgemäß beschichteten Textilstoffes im Vergleich zu den bekannten gummierten Geweben erreicht.

Im folgenden werden einige Ausführungsbeispiele der Erfindung mit verschiedener Schichtanordnung unter Bezugnahme auf die Zeichnung beschrieben. In der Zeichnung zeigt:

Fig. 1     einen erfindungsgemäß beschichteten Textilstoff, der für die Herstellung von Schutzkleidung besonders geeignet ist,

Fig. 2     einen Stoff mit mehrlagiger Trägerbahn,

Fig. 3     und 4 beschichtete Textilstoffe, die besonders zur Herstellung geschlossener Behälter geeignet sind.

Der Pfeil bezeichnet in allen Figuren die Angriffsfläche aggressiver Medien.

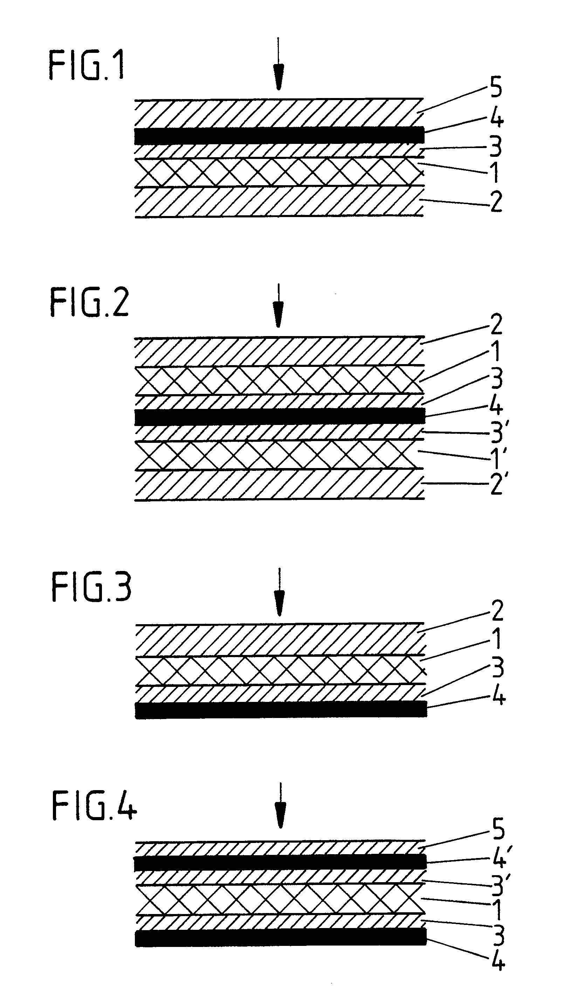

In Fig. 1 weist eine Gewebebahn 1 auf ihrer einen Oberfläche in bekannter Weise eine vorzugsweise aus einer Fluorkautschukmischung bestehende Gummischicht 2 auf. Auf der anderen Oberfläche befindet sich eine dünne Gummischicht 3 als Haftvermittler für eine darauf aufgelegte Polyimidschicht 4. An der den aggressiven Medien ausgesetzten Oberfläche ist über der Polyimidschicht 4 eine weitere Gummischicht 5 angeordnet. Diese Gummischicht 5 schützt die Polyimidschicht 4 gegen UV-Strahlen, gegen die dieses Material nicht sehr beständig ist, beeinträchtigt aber die durch die Polyimidschicht 4 erreichten vorteilhaften Eigenschaften des erfindungsgemäßen gummierten Textilstoffes, nämlich Gasdichtheit, allgemeine chemikalienresistenz, Thermostabilität und mechanische Festigkeit praktisch nicht. Diese Ausführungsform ist als Ausgangsstoff für die Herstellung von Schutzkleidung besonders geeignet.

Fig. 2 zeigt eine Anordnung mit zwei textilen Trägerbahnen 1,1', die auf ihren einander zugewandten Oberflächen die dünneren Gummischichten 3,3') für die Vernetzung mit einer dazwischen angeordneten Polyimidschicht 4 und auf ihren die Außenseiten des gummierten Textilstoffes bildenden Oberflächen Gummischichten 2,2' aufweisen. Diese Ausführungsform, die bei Bedarf noch durch weitere Trägerbahnen mit zugehörigen Gimmi- und Polyimidschichten verstärkt sein kann, wobei die Gesamtanordnung jeweils in einem gemeinsamen Vulkanisiervorgang hergestellt ist, wird vorzugsweise für starken Beanspruchungen ausgesetzte Abdeckplanen oder zur Herstellung von chemikalienfesten und gasdichten Behältern verwendet.

Für die Herstellung von Behältern ist auch die Ausführung gemäß Fig. 3 gut geeignet. Sie besteht aus einer Trägerban 1 mit einer Gummischicht 2 auf der den aggressiven Medien ausgesetzten Seite und einer auf der anderen Oberfläche vorgesehenen Gummischicht 3 als Haftvermittler für die Polyimidschicht 4, die hier nicht durch eine weitere Gummischicht abgedeckt werden muß, wenn sie beim fertigen Behälter dessen Innenwand bildet und dort keinen UV-Strahlen ausgesetzt ist.

In Fig. 4 ist die Beschichtung ähnlich wie bei der Ausführung gemäß Fig. 3. Auf der den aggressiven Medien ausgesetzten Seite der Trägerbahn 1 ist jedoch zwischen zwei Gummischichten 3 und 5 eine zweite Polyimidschicht 4' angeordnet, durch die die Widerstandsfähigkeit, insbesondere gegen Hitzebeanspruchung von dieser Seite, noch beträchtlich verstärkt wird. Falls ein derart beschichteter Stoff nicht zur Herstellung geschlossener Behälter, deren Innenseite gegen UV-Strahlung geschützt ist, verwendet wird, kann auch diePolyimidschicht 4 durch eine zusätzliche Gummischicht abgedeckt sein.

Die Polyimidschicht wird zwar im allgemeinen an die benachbarte, auf die Trägerbahn aufgetragene Gummischicht durch Vernetzung in gemeinsamer Vulkanisation gebunden. Es kann aber auch anstelle der Gummischicht eine auf die Trägerbahn aufgetragene Kleberschicht vorgesehen sein, an der die Polyimidschicht haftet.

Die Polyimidschicht kann bei der Herstellung nach dem erfindungsgemäßen Verfahren sowohl in Form einer Polyimidfolie auf die vorbeschichtete Trägerbahn aufgebracht werden, sie kann aber auch im Rakel- oder Spritzverfahren aufgetragen werden.

**Patentansprüche**

1.   Beschichteter Textilstoff bestehend aus mindestens einer textilen Trägerbahn und mindestens einer äußeren flexiblen Gummi- oder Kunststoffschicht,
dadurch gekennzeichnet, daß mindestens eine zusätzliche Polyimidschicht (4) angeordnet ist, die mit hoher Haftung an die jeweils benachbarte Schicht gebunden ist.

2.   Beschichteter Textilstoff nach Anspruch 1, dadurch gekennzeichnet, daß die Polyimidschicht eine Dicke von 5 bis 200 $\mu$m aufweist.

3.   Beschichteter Textilstoff nach Anspruch 2, dadurch gekennzeichnet, daß die Dicke der Polyimidschicht 15 bis 20 $\mu$m beträgt.

4.   Beschichteter Textilstoff nach den Ansprüchen 1 bis 3, dadurch gekennzeichnet, daß die Polyimidschicht durch Kleber an die benachbarte Schicht gebunden ist.

5.   Beschichteter Textilstoff nach einem der Ansprüche 1 bis 3, dadurch gekennzeichnet, daß die der Polyimidschicht (4) benachbarte Schicht eine Gummischicht (3) ist und die Polyimidschicht (4) durch Vernetzung mit ihr verbunden ist.

6. Beschichteter Textilstoff nach Anspruch 5, dadurch gekennzeichnet, daß die Gummischicht aus einer Fluorkautschukmischung besteht.

7. Beschichteter Textilstoff nach Anspruch 6, dadurch gekennzeichnet, daß auf einer Oberfläche der Trägerbahn (1) eine Gummischicht (2) von üblicher Stärke und auf der anderen Oberfläche eine dünne Gummischicht (3) als Haftvermittler zur Polyimidschicht (4) angeordnet ist.

8. Beschichteter Textilstoff nach Anspruch 7, dadurch gekennzeichnet, daß die Polyimidschicht (4) durch eine zusätzliche Gummischicht (5) abgedeckt ist.

9. Beschichteter Textilstoff nach Anspruch 1 und 5 oder 6, dadurch gekennzeichnet, daß eine Trägerbahn (1) auf ihren beiden Oberflächen jeweils eine Gummischicht (3,3') und darauf jeweils eine Polyimidschicht (4,4') aufweist und daß mindestens auf der als Außenseite bestimmten Oberfläche die Polyimidschicht durch eine zusätzliche Gummischicht (5) abgedeckt ist.

10. Beschichteter Textilstoff nach Anspruch 1 und 5 oder 6 mit mehrlagigen Trägerbahnen, dadurch gekennzeichnet, daß die Trägerbahnen (1,1') auf ihren beiden Oberflächen Gummischichten (2,2', 3,3') aufweisen und jeweils zwischen den einander zugewandten Gummischichten (3,3') zweier Trägerbahnen eine Polyimidschicht (4) angeordnet ist.

11. Verfahren zur Herstellung beschichteter Textilstoffe nach einem der Ansprüche 1 bis 10, dadurch gekennzeichnet, daß auf beiden Seiten einer Trägerbahn eine Fluorkautschukmischung aufgebracht und getrocknet wird und dann auf mindestens einer Seite eine Polyimidschicht und gegebenenfalls weitere Schichten aufgebracht werden und der derart beschichtete Textilstoff einer Vulkanisation unterworfen wird.

12. Verfahren nach Anspruch 11, dadurch gekennzeichnet, daß die Polyimidschicht (4) in Form einer Polyimid-Folie aufgebracht wird.

13. Verfahren nach Anspruch 11, dadurch gekennzeichnet, daß die Polyimidschicht in Pastenform im Rakelverfahren aufgebracht wird.

14. Verfahren nach Anspruch 11, dadurch gekennzeichnet, daß die Polyimidschicht aufgespritzt wird.

FIG.1

FIG.2

FIG.3

FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | GB-A-1265646 (GOODYEAR TIRE & RUBBER)<br>* Seite 5, Zeilen 45 - 52; Ansprüche 1-6 *<br>* Beispiel 1 *<br>--- | 1-4, 11 | D06N3/18<br>D06N3/12<br>D06N7/00<br>B32B27/12<br>A62D5/00 |
| A | FR-A-2131836 (PNEUMATIQUES, CAOUTCHOUC MANUFACTURE ET PLASTIQUES KLEBER-COLOMBES)<br>* das ganze Dokument *<br>--- | 1, 11 | |
| A | DE-A-2635098 (VEREINIGTE SEIDENWEBEREIEN)<br>* Ansprüche 1-26; Figur 1 *<br>--- | 1 | |
| A | GB-A-1185939 (GENTEX CORP.)<br>* Seite 1, Zeile 55 - Seite 2, Zeile 1;<br>Ansprüche 1, 2, 4 *<br>--- | 1 | |
| A | GB-A-2160123 (TIKKURILAN VARITEHTAAT OY)<br>* Seite 2, Zeilen 38 - 41; Ansprüche 1-10 *<br>* Beispiel 1 *<br>----- | 1-4 | |
| | | | RECHERCHIERTE SACHGEBIETE (Int. Cl.5 )<br><br>D06N<br>B32B<br>A62D |

Der vorliegende Recherchenbericht wurde für alle Patentansprüche erstellt

| Recherchenort | Abschlußdatum der Recherche | Prüfer |
|---|---|---|
| DEN HAAG | 17 SEPTEMBER 1990 | PFANNENSTEIN H. |

# ANHANG ZUM EUROPÄISCHEN RECHERCHENBERICHT
## ÜBER DIE EUROPÄISCHE PATENTANMELDUNG NR.

EP    90 10 5314

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17/09/90

| Im Recherchenbericht angeführtes Patentdokument | Datum der Veröffentlichung | Mitglied(er) der Patentfamilie | | Datum der Veröffentlichung |
|---|---|---|---|---|
| GB-A-1265646 | 01-03-72 | DE-A- | 2007926 | 01-10-70 |
| | | FR-A- | 2039608 | 15-01-71 |
| | | US-A- | 3577314 | 04-05-71 |
| FR-A-2131836 | 17-11-72 | BE-A- | 781397 | 17-07-72 |
| | | DE-A- | 2215399 | 12-10-72 |
| DE-A-2635098 | 09-02-78 | FR-A,B | 2386634 | 03-11-78 |
| GB-A-1185939 | 25-03-70 | DE-A- | 1804095 | 22-05-69 |
| GB-A-2160123 | 18-12-85 | CA-A- | 1258208 | 08-08-89 |
| | | DE-A- | 3519860 | 12-12-85 |
| | | FR-A,B | 2570099 | 14-03-86 |
| | | JP-A,B | 61012975 | 21-01-86 |
| | | SE-B- | 460123 | 11-09-89 |
| | | SE-A- | 8502670 | 13-12-85 |
| | | US-A- | 4619854 | 28-10-86 |

EPO FORM P0461

Für nähere Einzelheiten zu diesem Anhang : siehe Amtsblatt des Europäischen Patentamts, Nr.12/82